# EUROPÄISCHE PATENTSCHRIFT

(11) **EP 1 528 997 B1**
(45) Veröffentlichungstag und Bekanntmachung des Hinweises auf die Patenterteilung: **07.11.2007**
(21) Anmeldenummer: 03753345.2
(22) Anmeldetag: 31.07.2003
(51) Int. Cl.: B60T 8/00, B60T 8/26

(54) **INTEGRALBREMSANLAGE FÜR MOTORRÄDER**
INTEGRAL BRAKE SYSTEM FOR MOTORCYCLES
DISPOSITIF DE FREINAGE INTEGRE POUR MOTOS

(30) Priorität: 13.08.2002 DE 10237102
(43) Veröffentlichungstag der Anmeldung: 11.05.2005
(73) Patentinhaber: Bayerische Motoren Werke Aktiengesellschaft, 80809 München (DE)
(72) Erfinder: WAGNER, Hans-Albert, 81737 München (DE)
(86) Internationale Anmeldenummer: PCT/EP2003/008458
(87) Internationale Veröffentlichungsnummer: WO 2004/022395

(56) Entgegenhaltungen:
- EP-A- 0 559 224
- WO-A-02/22417
- DE-A- 3 706 663
- US-A- 4 440 452
- US-A- 4 626 042

## Beschreibung

Die vorliegende Erfindung betrifft eine Integralbremsanlage für Motorräder gemäß dem Oberbegriff des Patentanspruches 1.

Eine Integralbremsanlage für vierrädrige Fahrzeuge ist aus der DE 37 06 663 A1 bekannt. Zum relevanten Stand der Technik zählen ferner die US 4 626 042, die WO 02/22417 A1 sowie die EP 559 224 A2.

Im Zusammenhang mit Motorrädern versteht man unter dem Begriff "Integralbremsanlage" eine Bremsanlage, bei der bei einer Betätigung des "Handbremshebels" bzw. des "Fußbremshebels" gleichzeitig die Vorderradbremse und die Hinterradbremse angesteuert werden. Durch Betätigen eines einzigen Betätigungselementes können also beide Bremsen angesteuert werden. Dabei sind auch Kombinationen möglich, bei denen ein Bremshebel auf ein Rad und der andere Bremshebel auf beide Räder wirkt.

Eine Integralbremsanlage für Motorräder ist beispielsweise aus der DE 38 03 563 A1 bekannt. Bei dieser Bremsanlage wird bei einer Betätigung des Fußbremshebels gleichzeitig die Vorderradbremse und die Hinterradbremse mit Bremsdruck beaufschlagt. Ferner ist eine weitere Vorderradbremse vorgesehen, die durch Betätigen des Handbremshebels mit Bremsdruck beaufschlagbar ist. Die weitere Vorderradbremse ist unabhängig von der Betätigung des Fußbremshebels ansteuerbar. Bei einer Betätigung der weiteren Vorderradbremse findet eine zusätzliche dynamische Radlaständerung statt. Um bei einer Betätigung des Handbremshebels und des Fußbremshebels ein Blockieren des Hinterrades zu verhindern, ist ein Bremskraftregler vorgesehen, der den Bremsdruck an der Hinterradbremse entsprechend begrenzt.

In Bosch, Kraftfahrtechnisches Taschenbuch, 24. Auflage, Seite 717 ist eine Pkw-Bremsanlage beschrieben, bei der die Bremskraft gemäß einem fest vorgegebenen Verhältnis auf die Vorderachse und die Hinterachse aufgeteilt wird. Dort ist auch ein Bremskraftverteilungsdiagramm für die Vorderachse und die Hinterachse gezeigt, aus der die "ideale" Bremskraftverteilung hervorgeht. Unter dem Begriff "ideale Bremskraftverteilung" ist eine Bremskraftverteilung zu verstehen, die entsprechend der dynamischen Achslastverteilung angepasst wird.

Grundsätzlich wäre es zwar erstrebenswert, bei jeder Bremsung die Bremskraftverteilung zwischen der Vorderachse und der Hinterachse entsprechend der idealen Bremskraftverteilung einzustellen. Dadurch ließe sich einerseits eine optimale Bremswirkung erreichen. Andererseits könnte ein Überbremsen und somit ein übermäßiger Reifenverschleiß sowie ein Fahrstabilitätsverlust aufgrund der bei einem Bremsvorgang auftretenden Entlastung der Hinterachse vermieden werden. Eine ideale Bremskraftaufteilung bei jeglicher "Art" von Bremsvorgängen, das heißt auch bei leichten, unkritischen Bremsungen ist technisch aufwendig zu realisieren. Außerdem muss der eingesteuerte Bremsdruck vorne oder hinten, in der Regel jedoch an der Hinterachse, entsprechend der dynamischen Achslastverteilung durch ein Regelventil mehr oder weniger stark abgesenkt werden. Dies kann dann ähnlich wie bei einem ABS-Eingriff zu einem ruckelnden Bremsverhalten führen, was aus Komfortgründen und hinsichtlich der Fahrstabilität zumindest bei leichten bzw. unkritischen Bremsungen unerwünscht ist.

Aufgabe der Erfindung ist es, eine Integralbremsanlage für Motorräder zu schaffen, die einen hohen Bremskomfort und gleichzeitig eine höhe Bremssicherheit beim Bremsen bietet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Integralbremsanlage für Motorräder aus, das heißt von einer Bremsanlage, bei der durch Betätigen eines einzigen Betätigungselementes, beispielsweise des Fußbremshebels oder des Handbremshebels, gleichzeitig die Vorderradbremse und die Hinterradbremse ansteuerbar sind. Die Integralbremsanlage weist eine Regeleinrichtung auf, zum Beispiel eine elektrohydraulische Regeleinrichtung, mit der die Bremsdrücke an der Vorderradbremse und an der Hinterradbremse regelbar sind. An die Regeleinrichtung sind Raddrehzahlsensoren angeschlossen, welche die Raddrehzahlen und die hieraus ableitbaren Radbeschleunigungen messen. Aus den Raddrehzahlen und den Radbeschleunigungen kann jeweils eine der tatsächlichen Fahrzeuggeschwindigkeit bzw. der tatsächlichen Fahrzeugverzögerung angenäherte Referenzgeschwindigkeit bzw. Referenzverzögerung ermittelt werden.

Das Grundprinzip der Erfindung besteht darin, in ganz allgemein gesprochen "unkritischen Bremssituationen" die Gesamtbremskraft gemäß einem fest vorgegebenen Verhältnis auf die Vorderradbremse und die Hinterradbremse aufzuteilen, und nur in "kritischen" Bremssituationen die Bremskraft gemäß der idealen Bremskraftverteilung aufzuteilen.

Aus der Regelungstechnik von Bremsanlagen ist das sogenannte "Bremskraftverteilungsdiagramm" bekannt, wie es beispielsweise in Bosch, Kraftfahrtechnisches Taschenbuch, 24. Auflage, Seite 717 beschrieben ist. In einem solchen Bremskraftverteilungsdiagramm ist auf den Koordinatenachsen die auf die Gewichtskraft des Fahrzeugs normierte Bremskraft an der Vorderachse bzw. an der Hinterachse aufgetragen. Die ideale Bremskraftverteilung zwischen Vorder- und Hinterachse hat in diesem Diagramm einen "parabelähnlichen" Verlauf.

Gemäß der Erfindung wird in unkritischen Bremssituationen, das heißt in Bremssituationen, in denen die Bremskraft an der Hinterachse als auch die Bremskraft an der Vorderachse "unterhalb" der Kurve der idealen Bremskraftverteilung liegen, die Bremskraftverteilung entsprechend dem fest vorgegebenen, konstanten Bremskraftverhältnis eingestellt. Der "Bereich", in dem die Bremskraftaufteilung konstant ist, hat den Verlauf einer Geraden.

Ab dem Punkt, an dem die "Gerade" die parabelförmige Kurve der idealen Bremskraftverteilung schneidet, spricht man von einer "kritischen Bremssituation". In kritischen Bremssituationen wird die Bremskraftverteilung nicht mehr entsprechend dem fest vorgegebenen Verhältnis eingestellt, sondern entsprechend der Kurve der idealen Bremskraftverteilung geregelt.

Nach einer Weiterbildung der Erfindung ist vorgesehen, dass bei der Regelung der Bremskraftverteilung der Beladungszustand des Motorrads berücksichtigt wird. Der Beladungszustand des Motorrads beeinflusst die statischen Achslasten und somit auch die statische Achslastverteilung, was wiederum zu einer Veränderung der dynamischen Achslastverteilung führt. Entsprechend der jeweiligen Beladung des Motorrads gibt es jeweils eine zugeordnete Kurve für die ideale Bremskraftverteilung. Dementsprechend sind in der Regeleinrichtung für unterschiedliche Beladungszustände entsprechend unterschiedliche Kurven idealer Bremskraftverteilung abgelegt.

Der Beladungszustand des Motorrads kann entweder unmittelbar gemessen werden, beispielsweise durch Kraftsensoren oder Wegsensoren an den Radaufhängungen oder indirekt durch das Brems- bzw. Blockierverhalten der Räder ermittelt werden. Vereinfacht ausgedrückt wird hierbei in Abhängigkeit vom eingesteuerten Bremsdruck überwacht, ob eines der beiden Räder blockiert. Aus dem Blockierverhalten in Abhängigkeit vom eingsteuerten Bremsdruck kann ein Rückschluss auf den Beladungszustand des Motorrads gezogen werden. Vorzugsweise wird der Beladungszustand permanent überwacht und gegebenenfalls adaptiert, wenn der aktuelle Beladungszustand verändert wird oder unzutreffend bzw. zu ungenau abgeschätzt wurde.

Im folgenden wir die Erfindung im Zusammenhang mit der Zeichnung näher erläutert. Es zeigen:
- Figur 1: den prinzipiellen Aufbau einer Integralbremsanlage für Motorräder; und
- Figur 2: ein Bremskraftverteitungsdiagramm zur Erläuterung der Erfindung.

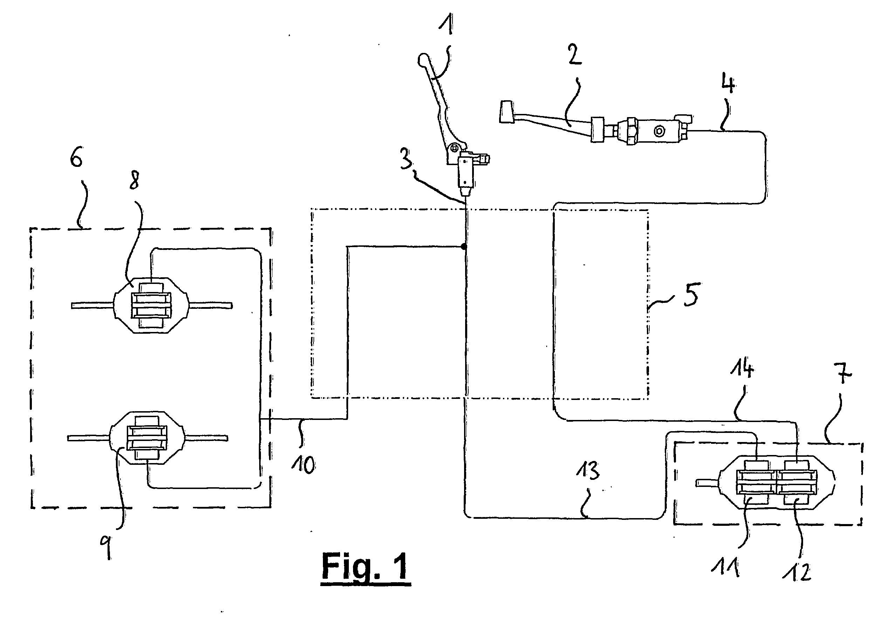

**Figur 1** zeigt schematisch eine Integralbremsanlage eines Motorrades. Zur Bremsbetätigung sind ein erster Bremshebel 1 und ein zweiter Bremshebel 2 vorgesehen. Der Bremshebel 1 kann beispielsweise ein Handbremshebel und der Bremshebel 2 kann beispielsweise ein Fußbremshebel sein. Die Bremshebel 1, 2 sind über zugeordnete Leitungen 3, 4 an eine hier nur schematisch angedeutete Regeleinrichtung 5 angeschlossen. Die Regeleinrichtung 5 kann beispielsweise eine elektrohydraulische Regeleinheit mit integriertem ABS (Antiblockiersystem) sein. Die Regeleinrichtung 5 steuert bzw. regelt sowohl die Bremskraftaufteilung zwischen Vorderachse und Hinterachse und begrenzt durch ihre ABS-Funktion bei einer Blockierneigung den Bremsdruck am jeweiligen Rad. Radgeschwindigkeiten werden durch Raddrehzahlsensoren gemessen. Aus den Radgeschwindigkeiten kann eine der tatsächlichen Fahrzeuggeschwindigkeit angenäherte Referenzgeschwindigkeit ermittelt werden. Ferner können aus den Radgeschwindigkeiten Radverzögerungen und eine der tatsächlichen Fahrzeugverzögerung angenäherte Referenzverzögerung abgeleitet werden.

Ferner sind schematisch eine Vorderradbremse 6 und eine Hinterradbremse 7 dargestellt. Die Vorderradbremse 6 besteht aus zwei Scheibenbremseinheiten 8, 9, die über eine gemeinsame Bremsleitung ansteuerbar sind. Die Hinterradbremse 7 weist hier zwei Bremseinheiten 11, 12 auf, die jeweils über eine separate Bremsleitung 13, 14 ansteuerbar sind. Die Bremsleitungen 10, 13 sind gemeinsam über den Bremshebel 1 ansteuerbar. Das heißt, durch Betätigen des Bremshebels 1 kann sowohl die Vorderradbremse 6 als auch die Hinterradbremse 7 betätigt werden. Die Bremseinheit 12 der Hinterradbremse 7 hingegen ist ausschließlich durch den Bremshebel 2 betätigbar.

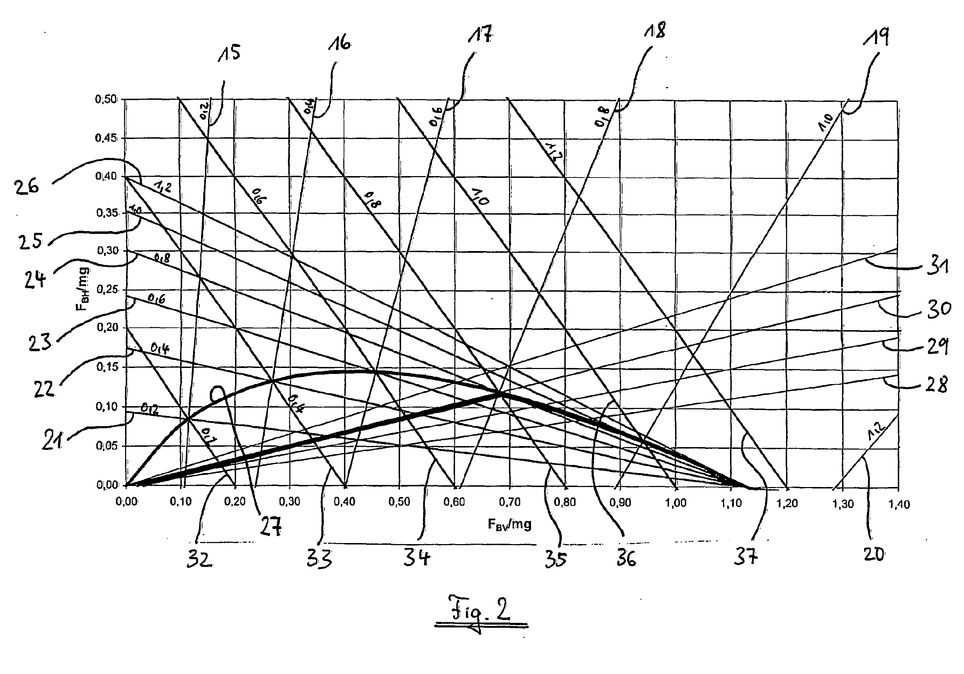

Die Regeleinrichtung 5, die zum Beispiel eine elektrohydraulische Regeleinrichtung ist, steuert bzw. regelt ganz allgemein gesprochen in Abhängigkeit vom Fahrzustand und vom Bremszustand die Bremskraftaufteilung auf die Vorderradbremse 6 und die Hinterradbremse 7, was im Zusammenhang mit **Figur 2** zeigt noch näher erläutert wird.

**Figur 2** zeigt ein Bremskraftverteilungsdiagramm. Auf der Abszisse und auf der Ordinate sind dimensionslos die Bremskräfte am Vorderrad F_{BV} bzw. am Hinterrad F_{BH} aufgetragen. Die Bremskraft am Vorderrad F_{BV} und die Bremskraft am Hinterrad F_{BH} sind jeweils auf die Gewichtskraft des Fahrzeugs, das heißt auf die Fahrzeugmasse multipliziert mit der Gravitationsbeschleunigung normiert und somit dimensionslos dargestellt. Für das Vorderrad sind Geraden 15 - 20 eingezeichnet, wobei die Geraden jeweils geometrische Orte gleicher Haftreibungszahl darstellen. Die Gerade 15 beispielsweise repräsentiert eine Haftreibungszahl von 0,2 am Vorderrad.

Entsprechend sind Geraden 21 - 26 eingezeichnet. Die Geraden 21 - 26 repräsentieren geometrische Orte mit gleicher Haftreibungszahl am Hinterrad. Beispielsweise beträgt die Haftreibungszahl am Hinterrad auf der Geraden 23 0,6. Die Schnittpunkte der Geraden mit gleicher Haftreibungszahl von Vorderrad und Hinterrad ergeben die Kurve 27. Die Kurve 27 gibt die bei einer vorgegebenen Fahrzeugbeladung "ideale Bremskraftverteilung" zwischen Vorderachse und Hinterachse wieder. Die Kurve 27 hat einen gekrümmten Verlauf. Das heißt, die ideale Bremskraftverteilung ändert sich in Abhängigkeit von der Fahrzeugverzögerung.

Ferner sind Geraden 28 - 31 eingezeichnet. Die Geraden 28 - 31 repräsentieren geometrische Orte, bei denen die Bremskraftaufteilung auf die Vorderachse und die Hinterachse jeweils gemäß einem konstanten Bremskraftverhältnis erfolgt.

Das Bremskraftverteilungsdiagramm wird schließlich vervollständigt durch Geraden 32 - 37. Die Geraden 32 - 37 repräsentieren geometrische Orte konstanter Abbremsung des Fahrzeugs. Beispielsweise repräsentiert die Gerade 34 eine Fahrzeugabbremsung von 0,6 * g, wobei g die Erdbeschleunigung ist.

Es wurde bereits erwähnt, dass die Kurve 27 für einen bestimmten Beladungszustand des Fahrzeugs gültig ist. Bei einer Änderung der Fahrzeugbeladung verschieben sich sowohl die Geraden 15 - 19 und die Geraden 21 - 26, was folglich auch zu einer Änderung des Verlaufs der Kurve 27, das heißt der idealen Bremskraftverteilung führt. Aus Gründen der Übersichtlichkeit jedoch ist in **Figur 2** nur eine dieser Kurven 27 eingezeichnet. In der Regeleinrichtung 5 (**Figur 1**) ist jedoch ein ganzes Kennfeld, das heißt eine Schar solcher Kurven 27 für unterschiedliche Beladungszustände abgespeichert.

Kern der Erfindung ist es nun, in unkritischen Bremssituationen die Bremskraft gemäß einem fest vorgegebenen Verhältnis auf die Vorderachse und die Hinterachse aufzuteilen. Beispielsweise wird eine Bremskraftverteilung entsprechend der Steigung der Geraden 30 gewählt. Unter dem Begriff "unkritische Bremssituation" ist ein Bremszustand zu verstehen, der "unterhalb" der Kurve 27 liegt. Unterhalb der Kurve 27 wird also eine konstante Bremskraftverteilung entsprechend der Geraden 30 eingesteuert. Bei Überschreiten einer vorgegebenen Fahrzeugverzögerung, hier der Fahrzeugverzögerung von 0,8 g, was durch die Gerade 35 repräsentiert ist, wird die Regelstrategie geändert.

Das heißt, bei Verzögerungen, bei denen die "gewählte" Gerade konstanter Verzögerung die Kurve 27 der idealen Bremskraftverteilung schneidet, wird die Bremskraftverteilung entsprechend dem Verlauf der idealen Bremskraftverteilung geregelt. Bildlich gesprochen knickt die Regelkurve also in die Kurve der idealen Bremskraftverteilung ab. Bei dem hier gezeigten Ausführungsbeispiel ist dies bei einer Beschleunigung von 0,8 * g der Fall. Bei Fahrzeugverzögerungen, die kleiner als 0,8 * g sind, steigt die Bremskraft an der Hinterachse entsprechend der Steigung der Gerade 30 mit der Bremskraft an der Vorderachse an. Erst bei Verzögerungen von größer als 0,8 * g wird aufgrund der zunehmend stärker ins Gewicht fallenden dynamischen Achslastverteilung auf die Vorderachse der Bremsdruck bzw. die Bremskraft an der Hinterachse mit zunehmender Erhöhung der Bremskraft an der Vorderachse abgesenkt, was an dem Verlauf der Kurve 27 ablesbar ist.

Während der Fahrt wird ständig der Beladungszustand des Motorrads überwacht. Dies kann beispielsweise durch Kraft bzw. Wegaufnehmer an den Radaufhängungen erfolgen. Alternativ dazu kann der Beladungszustand des Motorrades auch durch eine Überwachung der Blockierneigung des Vorderrades und des Hinterrades in Abhängigkeit vom eingesteuerten Bremsdruck in bekannter Weise abgeschätzt werden.

Kommt das Vorderrad in den Bereich der "ABS-Regelung", das heißt wenn am Vorderrad Blockierneigung besteht, kann durch Vergleich der Blockierdrücke am Vorder- und Hinterrad bei der entsprechenden Fahrzeugverzögerung der Beladungszustand adaptiert werden. Befindet sich das Vorderrad vor dem Hinterrad in der ABS-Regelung, wird zusätzliche Beladung erkannt. Regelt hingegen des Hinterrad vor dem Vorderrad, wird die abgeschätzte Beladung reduziert. Somit kann mit zunehmender Fahrtdauer der Beladungszustand sukzessive immer genauer abgeschätzt werden. In Abhängigkeit vom Beladungszustand wird auf eine dem jeweiligen Beladungszustand zugeordnete Kurve 27 zurückgegriffen, die in der Regeleinrichtung 5 abgelegt ist.

Vollständigkeit halber wird darauf hingewiesen, dass die Regelung der Bremskraftaufteilung zwischen Vorderrad und Hinterrad in der Regelhierarchie der ABS-Regelung "untergeordnet" ist. Das heißt, bei auftretender Blockierneigung am Vorderrad und/oder am Hinterrad wird der Bremsdruck an der jeweiligen Bremse durch die ABS-Regelung stets verringert.

Ein wesentlicher Vorteil der Erfindung besteht darin, dass in unkritischen Bremssituationen die Bremskraftaufteilung konstant ist. Ruckelbewegungen, die durch pulsende Bremsdruckbegrenzungsventile hervorgerufen werden, treten somit in unkritischen Bremssituationen nicht auf.

## Patentansprüche

1. Integralbremsanlage mit
einer Vorderradbremse (6) eines Vorderrads und einer Hinterradbremse (7) eines Hinterrads,
einem Betätigungselement (1, 2), mit dem gleichzeitig die Vorderradbremse (6) und die Hinterradbremse (7) ansteuerbar ist,
einer Regeleinrichtung (5) zur Regelung der Bremsdrücke an der Vorderradbremse (6) und an der Hinterradbremse (7), wobei
bei einer Betätigung des Betätigungselementes (1, 2) in manchen Fahrzuständen die Vorderradbremse (6) und die Hinterradbremse (7) mit einem fest vorgegebenen Bremsdruckverhältnis angesteuert werden, wobei
bei einer Betätigung des Betätigungselementes (1, 2) die Regeleinrichtung (5) die Vorderradbremse (6) und die Hinterradbremse (7) mit einem fest vorgegebenen Bremsdruckverhältnis ansteuert, sofern die Referenzverzögerung kleiner als eine vorgegebene Verzögerung ist,
**dadurch gekennzeichnet,**
**dass** es sich um eine Integralbremsanlage für Motorräder handelt,
**dass** Raddrehzahlsensoren zur Messung der Raddrehzahlen des Vorderrads und des Hinterrads zur Erkennung von Fahrzuständen vorgesehen sind, in denen am Vorderrad und/oder am Hinterrad Blockierneigung besteht, wobei die Raddrehzahlsensoren an die Regeleinrichtung (5) angeschlossen sind und mittels der Raddrehzahlsensoren eine der tatsächlichen Fahrzeugverzögerung angenäherte Referenzverzögerung ermittelt wird, und
**dass** die Regeleinrichtung das Bremsdruckverhältnis entsprechend einer idealen Bremskraftverteilungsfunktion zwischen Vorderrad und Hinterrad in Abhängigkeit von der Referenzverzögerung regelt, wenn die Referenzverzögerung eine vorgegebene kritische Verzögerung überschreitet, wobei sich die ideale Bremskraftverteilungsfunktion **dadurch** auszeichnet, dass am Vorderrad und am Hinterrad die gleiche Haftreibungszahl auftritt.

2. Integralbremsanlage nach Anspruch 1, wobei in der Regeleinrichtung (5) eine Schar von idealen Bremskraftverteilungsfunktionen gespeichert ist, nach denen das Bremsdruckverhältnis variiert werden kann, und dass aus der Schar von Bremskraftverteilungsfunktionen in Abhängigkeit vom Beladungszustand des Fahrzeugs eine Bremskraftverteilungsfunktion für die momentane Regelung ausgewählt wird.

3. Integralbremsanlage nach Anspruch 2, wobei der Beladungszustand durch Überwachen der Blockierneigung am Vorderrad und am Hinterrad abgeschätzt und der aktuell für die Regelung zugrundegelegte Beladungszustand in der Regeleinrichtung (5) gespeichert ist.

4. Integralbremsanlage nach Anspruch 3, wobei der gespeicherte Beladungszustand als zu gering angesehen und für die weitere Regelung der Bremsdruckverteilung ein entsprechend höherer Beladungszustand angesetzt wird, wenn bei einem Bremsvorgang zuerst am Vorderrad Blockierneigung auftritt und
der gespeicherte Beladungszustand als zu hoch angesehen und für die weitere Regelung der Bremsdruckverteilung ein entsprechend niedrigerer Beladungszustand angesetzt wird, wenn bei einem Bremsvorgang zuerst am Hinterrad Blockierneigung auftritt.

5. Integralbremsanlage nach einem der vorgehenden Ansprüche, wobei zusätzlich eine ABS-Regeleinrichtung vorgesehen ist, die bei Auftreten einer Blockierneigung am Vorderrad und/oder am Hinterrad den Bremsdruck an der jeweiligen Bremse verringert, wobei die ABS-Regelung der Regelung der Bremsdruckverteilung vorgeht.

## Claims

1. An integral brake system comprising
a front wheel brake (6) of a front wheel and a rear wheel brake (7) of a rear wheel,
an element (1, 2) for actuating the front wheel brake (6) and the rear wheel brake (7) simultaneously,
a control device (5) for controlling the brake pressure on the front wheel brake (6) and the rear wheel brake (7), wherein
in many driving situations, when the element (1, 2) is actuated the front wheel brake (6) and the rear wheel brake (7) are actuated at a fixed set brake pressure ratio, wherein
when the element (1, 2) is actuated the control device (5) actuates the front wheel brake (6) and the rear wheel brake (7) in a fixed set brake pressure ratio, provided the reference deceleration is lower than a set deceleration,
**characterised in that**
the system is an integral brake system for motorcycles,
sensors for measuring the speed of the front wheel and rear wheel are provided for recognising driving conditions in which there is a tendency for the front wheel and/or rear wheel to lock, wherein the wheel speed sensors are connected to the control device (5) and are used to determine a reference deceleration approximating the actual deceleration of the vehicle, and
the control device controls the brake pressure ratio in accordance with an ideal brake force distribution function between the front wheel and rear wheel in dependence on the reference deceleration, if the reference deceleration exceeds a set critical deceleration, wherein the ideal brake force distribution function is **characterised in that** the same coefficient of static friction applies to the front wheel and to the rear wheel.

2. An integral brake system according to claim 1, wherein a family of ideal brake force distribution functions are stored in the control device (5) for use in varying the brake pressure ratio, and a brake force distribution function for control at any moment is selected from the family of brake force distribution functions in dependence on the load on the vehicle.

3. An integral brake system according to claim 2, wherein the load is estimated by monitoring the tendency of the front wheel or rear wheel to lock and the actual load state on which the control is based is stored in the control device (5).

4. An integral brake system according to claim 3, wherein the stored load is regarded as too small and a correspondingly heavier load is set for subsequent control of the brake pressure distribution if a tendency to lock during braking occurs first at the front wheel, and
the stored load is regarded as too high and a correspondingly lighter load is set for subsequent control of the brake pressure distribution if a tendency to lock during a braking operation occurs first at the rear wheel.

5. An integral brake system according to any of the preceding claims, wherein an ABS control device is additionally provided and reduces the pressure at the appropriate brake if the front wheel and/or rear wheel tends to lock, wherein the ABS control has precedence over the brake pressure distribution.

## Revendications

1. Installation de freinage intégral, comprenant :
- un frein de roue avant 6 et un frein de roue arrière 7,
- un élément d'actionnement 1, 2 commandant simultanément le frein de roue avant 6 et le frein de roue arrière 7,
- un dispositif de régulation 5 pour réguler la pression de freinage sur le frein de roue avant 6 et sur le frein de roue arrière 7,
dans laquelle
un actionnement de l'élément d'actionnement 1, 2 commande dans la plupart des situations de marche le frein de roue avant 6 et le frein de roue arrière 7 avec un rapport fixe prédéfini de répartition de pression, et
en cas d'actionnement de l'élément d'actionnement 1, 2, le dispositif de régulation 5 commande un rapport de répartition de pression de freinage fixe prédéfini sur le frein de roue avant 6 et le frein de roue arrière 7, tant qu'un ralentissement de référence est inférieur à un ralentissement prédéterminé,
**caractérisée en ce qu'**
elle s'applique à une moto,
des capteurs de vitesse de rotation sont prévus pour mesurer les vitesses des roues avant et arrière, et pour reconnaître les états de marche dans lesquels la roue avant et/ou la roue arrière a une tendance au blocage,
les capteurs de vitesse de roue sont raccordés au dispositif de régulation 5 pour, à partir d'eux, calculer un ralentissement de référence approché du ralentissement effectif du véhicule, et
le dispositif de régulation 5 régule le rapport de pression de freinage selon une fonction de répartition de force de freinage entre la roue avant et la roue arrière en fonction du ralentissement de référence, si le ralentissement de référence dépasse un ralentissement critique donné, la répartition idéale de force de freinage **se caractérisant par** un même indice d'adhérence sur la roue avant et sur la roue arrière.

2. Installation de freinage intégral selon la revendication 1,
**caractérisée en ce qu'**
on enregistre dans le dispositif de régulation 5 une multitude de fonctions de répartition de force de freinage permettant de modifier le rapport de pression de freinage, et on sélectionne une fonction de répartition de force de freinage de la multitude de fonctions pour la régulation momentanée en fonction d'un état de charge du véhicule.

3. Installation de freinage intégral selon la revendication 2,
**caractérisée en ce qu'**
on estime l'état de charge du véhicule en surveillant la tendance au blocage de la roue avant et de la roue arrière, et on enregistre dans le dispositif de régulation 5 l'état de charge actuel comme élément fondamental de la régulation.

4. Installation de freinage intégral selon la revendication 3,
**caractérisée en ce qu'**
si lors d'un freinage c'est d'abord la roue avant qui a une tendance au blocage, on considère l'état de charge enregistré comme trop faible et on dépose un état de charge proportionnellement plus élevé pour la régulation suivante de la répartition de force de freinage, et
si lors d'un freinage c'est d'abord la roue arrière qui a une tendance au blocage, on considère l'état de charge enregistré comme trop fort et on dépose un état de charge proportionnellement plus faible pour la régulation suivante de la répartition de force de freinage.

5. Installation de freinage intégral selon l'une des revendications précédentes,
**caractérisée en ce qu'**
une régulation ABS, prévue en plus, diminue la pression de freinage sur le frein concerné en cas de tendance au blocage de la roue avant et/ou de la roue arrière, cette régulation ABS pilotant en amont la régulation de la répartition de force de freinage.
